# EUROPÄISCHE PATENTSCHRIFT

(11) **EP 1 557 319 B1**
(45) Veröffentlichungstag und Bekanntmachung des Hinweises auf die Patenterteilung: **27.09.2006**
(21) Anmeldenummer: 04106782.8
(22) Anmeldetag: 21.12.2004
(51) Int. Cl.: B60R 11/02

(54) **Geräteblende**
Apparatus front panel
Façade d'appareil

(30) Priorität: 23.01.2004 DE 102004003546
(43) Veröffentlichungstag der Anmeldung: 27.07.2005
(73) Patentinhaber: SIEMENS AKTIENGESELLSCHAFT, 80333 München (DE)
(72) Erfinder: Bender, Klaus-Werner, 35516 Muenzenberg (DE); Faber, Stefan, 35625 Hüttenberg (DE); Knoop, Thomas, 35510 Butzbach (DE)

(56) Entgegenhaltungen:
- EP-A- 0 308 052
- DE-A1- 3 535 751
- DE-A1- 3 731 894
- US-A- 4 169 624
- US-A- 4 372 509

## Beschreibung

### Geräteblende

Die Erfindung bezieht sich auf eine Geräteblende, insbesondere Autoradioblende für ein in eine Aufnahmeöffnung eines Armaturenbretts eines Kraftfahrzeugs einbaubares Gerät, insbesondere eines Autoradios, wobei das Gerät in eine in der Aufnahmeöffnung angeordnete Halterung einschiebbar und durch Halteelemente sicherbar sowie mittels eines stiftartigen Werkzeugs die Halteelemente in ihre Entsicherungsposition bewegbar und das Gerät aus der Halterung herausziehbar ist, mit zum Fahrgastraum des Kraftfahrzeugs gerichteten Entsicherungsöffnungen in der Geräteblende, durch die das stiftartige Werkzeug die Halteelemente entsichernd hindurchführbar ist, wobei die Entsicherungsöffnungen durch Verschlusselemente verschließbar sind. Dokument DE-A-3731894 offenbart eine solche Autoradioblende.

Derartige bekannte Autoradioblenden können als Halteelemente Federarme mit Rasthaken aufweisen, die von der Rückseite der Autoradioblende wegragen und beim Erreichen der Einbauposition des Autoradios in der Halterung mit ihren Rasthaken in Rastausnehmungen einrasten. Zum Lösen dieser Sicherung werden von der Seite des Fahrgastraums her stiftartige Werkzeuge durch die Entsicherungsöffnungen hindurchgeführt, die mit ihren Stirnseiten die Federarme beaufschlagen und entgegen deren Federkraft derart aus ihrer Normallage auslenken, dass die Rasthaken aus ihren Rastausnehmungen herausbewegt werden.

Zum Verschließen der Entsicherungsöffnungen dienen Gewindestifte, die vorzugsweise eine Innensechskantvertiefung an ihrer dem Fahrgastraum zugewandten Stirnseite aufweisen, in die zum Ein- oder Ausschrauben des Gewindestifts ein Sechskant-Stiftschlüssel eingeführt werden kann.

Bei der Montage der Autoradioblende ist es schwierig und aufwendig die Gewindestifte so in die Entsicherungsöffnungen einzuschrauben, dass sie auf gleichmäßige Tiefe eingeschraubt sind. Ist dies nicht der Fall, ist der optische Eindruck der Autoradioblende schlecht. Darüber hinaus müssen die Gewindestifte eine gute Korrosionsbeständigkeit aufweisen, damit dauerhaft eine Korrosion der zum Fahrgastraum gerichteten Stirnseite der Gewindestifte vermieden wird.

Weiterhin ist es schwierig die Oberfläche der dem Fahrgastraum zugewandten Stirnseite, die häufig eine Schwarzfärbung besitzt, beim Einschrauben der Gewindestifte mittels des Stiftschlüssels unbeschädigt zu halten.

Aufgabe der Erfindung ist es daher eine Geräteblende der eingangs genannten Art zu schaffen, die eine unbeschädigte Oberfläche in gleicher Ebene der dem Fahrgastraum zugewandten Seiten der Verschlusselemente ermöglicht und einen separaten Montageaufwand der Verschlusselemente vermeidet.

Diese Aufgabe wird erfindungsgemäß dadurch gelöst, dass die Verschlusselemente über radial umlaufende Sollbruchstellen einteilig mit der Geräteblende ausgebildet sind.

Durch diese einteilige Ausgestaltung sind keine montagebedingten unterschiedlichen Ebenen der dem Fahrgastraum zugewandten Stirnseiten der Verschlusselemente und auch keine montagebedingten Beschädigungen dieser Stirnseiten möglich. Eine Montage der Verschlusselemente findet überhaupt nicht statt.

Sollte eine Demontage des Autoradios erforderlich sein, was normalerweise während der Lebensdauer des Kraftfahrzeugs nur ausnahmsweise der Fall ist, so wird das Verschlusselement von der Seite des Fahrgastraums her so belastet, dass die Sollbruchstellen aufbrechen und das Verschlusselement entfernt sowie das Autoradio entsichert und aus seiner Halterung herausbewegt werden kann. Nach einem anschließenden Wiedereinbau des Autoradios können in herkömmlicher Weise die Entsicherungsöffnungen mittels Gewindestiften verschlossen werden. Darüber hinaus erlauben die unbeschädigten Sollbruchstellen der Verschlusselemente eine eindeutige Indikation, dass das Autoradio wirklich original bei dem Fahrzeughersteller verbaut und nicht später durch ein Autoradio z.B. minderer Qualität ausgetauscht wurde.

Zum einfachen und sauberen Entfernen der Verschlusselemente können die Verschlusselemente auf ihrer dem Fahrgastraum zugewandten Seite ein Formteil zur formschlüssigen Aufnahme eines Werkzeugs aufweisen, mittels dessen die Verschlusselemente um die Längsachse der Entsicherungsöffnungen drehbar sind.

Damit kommt es durch die Drehbewegung zu einem Abscheren an den Sollbruchstellen, was ein gleichmäßiges und sauberes Aufreißen ermöglicht.

Um eine Verletzungsgefahr durch an der Geräteblende zum Fahrgastraum hin hervorstehende Teile zu vermeiden, ist das Formteil vorzugsweise eine vertiefte Aufnahme für ein Drehwerkzeug, wobei die vertiefte Aufnahme ein Schlitz oder Kreuzschlitz zum Aufnehmen eines Schraubendrehers sein kann.

Um sicher auch mit größeren Kräften auf die Sollbruchstellen einwirken zu können, ist die vertiefte Aufnahme eine Innenmehrkantvertiefung insbesondere eine Innensechskantvertiefung zum Aufnehmen eines entsprechenden Mehrkant-Stiftschlüssels insbesondere eines Sechskant-Stiftschlüssels.

Ist dabei die Innenmehrkantvertiefung zum Aufnehmen eines Torx-Stiftschlüssels ausgebildet, so bedeutet dies auch eine Behinderung eines ungewollten Ausbaus wie z.B. eines Diebstahls, da dazu ein nicht üblicher Torx-Stiftschlüssel vorhanden sein muss.

Darüber hinaus ist die Kraftbeaufschlagung der Innenmehrkantvertiefung durch den Torx-Stiftschlüssel weitgehend nur in Umfangsrichtung und ohne nennenswerte Radialkräfte, so dass keine wesentliche Belastung des die Entsicherungsöffnung umgebenden Materials der Autoradioblende erfolgt.

Die vertieften Aufnahmen in der Form von Schlitzen, Kreuzschlitzen, Innenmehrkantvertiefungen und Torx-Vertiefungen besitzen den weiteren Vorteil, dass sowohl das Entfernen der Verschlusselemente als auch ein anschließendes Einschrauben von Verschlussschrauben mit dem selben Werkzeug durchgeführt werden kann.

Die dem Fahrgastraum zugewandte Oberfläche der Verschlusselemente kann gegenüber der dem Fahrgastraum zugewandten Oberfläche der Geräteblende vertieft sein.

Um zu vermeiden, dass an der dem Fahrgastraum zugewandten Oberfläche der Autoradioblende ein scharfer Trenngrad durch das Entfernen des Verschlusselements entsteht, ist vorzugsweise die radial umlaufende Sollbruchstelle in einer gegenüber der dem Fahrgastraum zugewandten Oberfläche vertieften Ebene ausgebildet.

Sind die Entsicherungsöffnungen ganz oder teilweise sich zu der dem Fahrgastraum zugewandten Seite hin konisch erweiternd ausgebildet, wird auf einfache Weise vermieden, dass die abgetrennten Verschlusselemente in das Innere des Autoradios fallen können. Dabei ist die Sollbruchstelle vorzugsweise im Bereich der konischen Erweiterung angeordnet.

Um nach einem Wiedereinbau des Autoradios eine sichere Halterung mit ausreichender Führungslänge für die Verschlussschrauben zu erhalten, können sich die Entsicherungsöffnungen durch an der dem Fahrgastraum abgewandten Seite hervorstehende Ansätze erstrecken.

Sind Geräteblende und Verschlusselemente als Spritzgussteil, insbesondere als Kunststoffspritzgussteil ausgebildet, so ermöglicht dies eine einfache und kostengünstige Herstellung dieses Bauteils.

Ein Ausführungsbeispiel der Erfindung ist in der Zeichnung dargestellt und wird im Folgenden näher beschrieben. Es zeigen
- Figur 1: eine Ansicht einer Autoradioblende
- Figur 2: einen vergrößerten Ausschnitt "Y" der Autoradioblende nach Figur 1
- Figur 3: eine perspektivische Ansicht des vergrößerten Ausschnitts "Y" nach Figur 2
- Figur 4: einen Querschnitt der Autoradioblende nach Figur 1 im Bereich einer Entsicherungsöffnung mit einem Verschlusselement
- Figur 5: einen Schnitt entlang der Linie "X-X" in Figur 4
- Figur 6: einen Querschnitt der Autoradioblende nach Figur 1 im Bereich einer Entsicherungsöffnung mit einer Verschlussschraube.

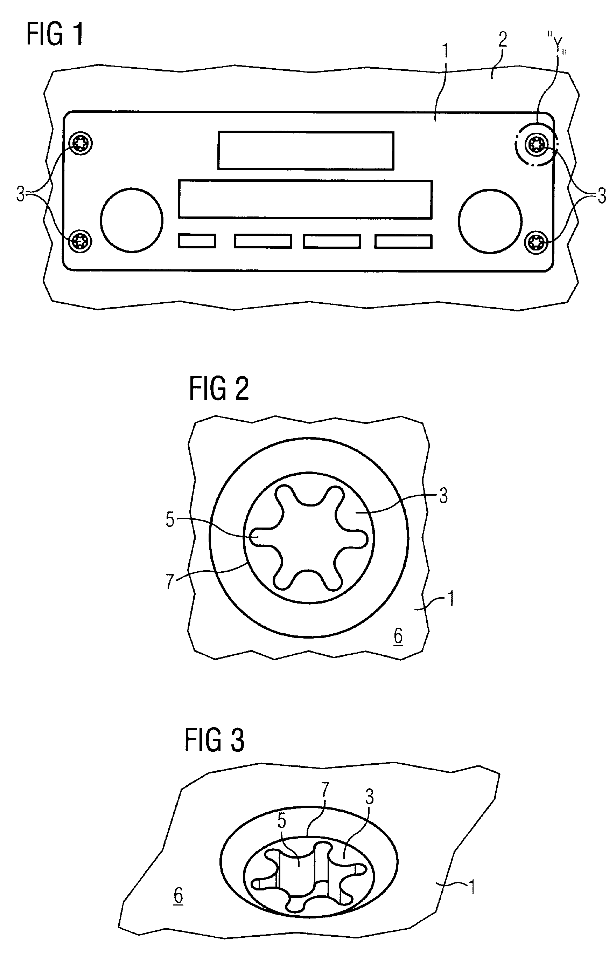

In Figur 1 ist die einen Fahrgastraum eines Kraftfahrzeugs zugewandte Seit einer Autoradioblende 1 eines Autoradios dargestellt, das in ein Armaturenbrett 2 des Kraftfahrzeugs eingebaut ist. Das Autoradio ist hierzu in eine Halterung eingeschoben und durch Halteelemente gesichert, die in einer Aufnahmeöffnung im Armaturenbrett ausgebildet ist. Die Autoradioblende 1 besitzt in ihren beiden äußeren Seitenbereichen durch Verschlusselemente 3 verschlossene Entsicherungsöffnungen 4.

Zum Ausbau des Autoradios werden die Verschlusselemente 3 entfernt und stiftartige Werkzeuge in die Entsicherungsöffnungen 4 zum Lösen von der Halterung eingesteckt.

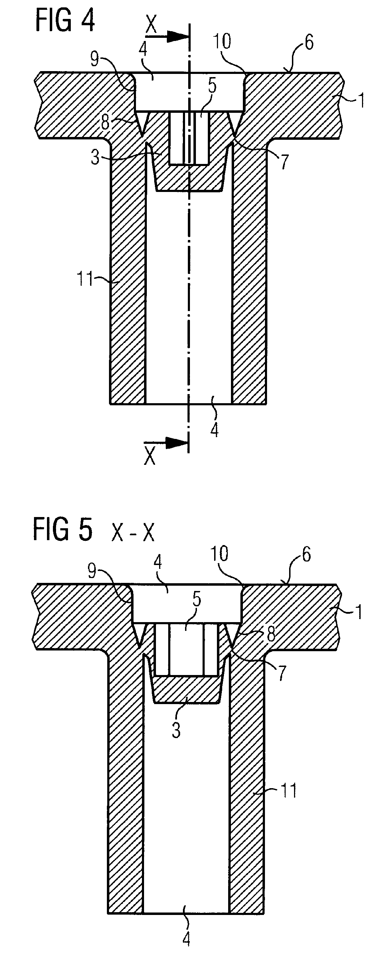

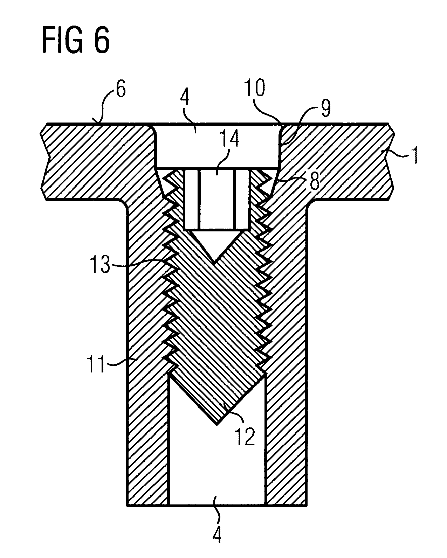

Wie insbesondere den Figuren 4 und 5 zu entnehmen ist, sind die Verschlusselemente 3 topfartig mit einer Innenmehrkantvertiefung 5 zur Aufnahme eines Torx-Stiftschlüssels ausgebildet, deren Öffnung dem Fahrgastraum zugewandt ist. Dabei ist die dem Fahrgastraum zugewandte Oberfläche der Verschlusselemente 3 gegenüber der dem Fahrgastraum zugewandten Oberfläche 3 der Autoradioblende 1 vertieft angeordnet.

Über eine radial umlaufende dünne Sektion, die eine Sollbruchstelle 7 bildet, ist das Verschlusselement 3 einteilig mit der Autoradioblende 1 als Spritzgussteil aus Kunststoff ausgebildet.

Im Bereich der Sollbruchstelle 3 sind die Entsicherungsöffnungen 4 mit einer konischen Erweiterung 8 ausgebildet, die dann über einen zylindrischen Teil 9 zur Oberfläche 6 der Autoradioblende 1 führt und an ihrer Mündung in die Oberfläche 6 eine sich erweiternde Verrundung 10 besitzt.

Zu der dem Fahrgastraum abgewandten Seite stehen zylindrische Ansätze 11 hervor, durch die sich die Entsicherungsöffnungen 4 von der konischen Erweiterung 8 aus zylindrisch weiter erstrecken.

Um die bereits montierte Autoradioblende 1 zu demontieren, wird ein Torx-Stiftschlüssel in die entsprechend ausgebildeten Innenmehrkantvertiefungen 5 eingeführt und um seine Längsachse verdreht, so dass die Verschlusselemente 3 entlang ihrer Sollbruchstellen 7 von der Autoradioblende 1 abgetrennt werden und aus der Sicherungsöffnung 4 entnommen werden können.

Durch Einführen stiftartiger Werkzeuge in die Entsicherungsöffnungen 4 werden die nicht dargestellten Halteelemente der Autoradioblende 1 in ihre Entsicherungsposition bewegt. Die Autoradioblende 1 sowie mit ihr das Autoradio kann aus der Halterung der Aufnahmeöffnung herausbewegt werden.

Nachdem die Autoradioblende 1 wieder in ihre durch die Halteelemente gesicherte Position gebracht wurde, werden Verschlussschrauben 12 in die Entsicherungsöffnungen 4 eingeschraubt (Figur 6). Diese schneiden dabei selbsttätig ein Gewinde 13 in die Entsicherungsöffnung 4. Zum Einschrauben der Verschlussschrauben 12 besitzen diese an ihrer dem Fahrgastraum zugewandten Stirnseite eine Innenmehrkantvertiefung 14 zur Aufnahme eines entsprechenden Stiftschlüssels.

## Patentansprüche

1. Geräteblende, insbesondere Autoradioblende für ein in eine Aufnahmeöffnung eines Armaturenbretts eines Kraftfahrzeugs einbaubares Gerät, insbesondere eines Autoradios, wobei das Gerät in eine in der Aufnahmeöffnung angeordnete Halterung einschiebbar und durch Halteelemente sicherbar sowie mittels eines stiftartigen Werkzeugs die Halteelemente in ihre Entsicherungsposition bewegbar und das Gerät aus der Halterung herausziehbar ist, mit zum Fahrgastraum des Kraftfahrzeugs gerichteten Entsicherungsöffnungen in der Geräteblende, durch die das stiftartige Werkzeug die Halteelemente entsichernd hindurchführbar ist, wobei die Entsicherungsöffnungen durch Verschlusselemente verschließbar sind, **dadurch gekennzeichnet, dass** die Verschlusselemente (3) über radial umlaufende Sollbruchstellen (7) einteilig mit der Geräteblende (1) ausgebildet sind.

2. Geräteblende nach Anspruch 1, **dadurch ge- kennzeichnet, dass** die Verschlusselemente (3) auf ihrer dem Fahrgastraum zugewandten Seite ein Formteil zur formschlüssigen Aufnahme eines Werkzeugs aufweisen, mittels dessen die Verschlusselemente (3) um die Längsachse der Entsicherungsöffnungen (4) drehbar sind.

3. Geräteblende nach Anspruch 2, **dadurch ge- kennzeichnet, dass** das Formteil eine vertiefte Aufnahme für ein Drehwerkzeug ist.

4. Geräteblende nach Anspruch 3, **dadurch ge- kennzeichnet, dass** die vertiefte Aufnahme ein Schlitz oder Kreuzschlitz zum Aufnehmen eines Schraubendrehers ist.

5. Geräteblende nach Anspruch 3, **dadurch ge- kennzeichnet, dass** die vertiefte Aufnahme eine Innenmehrkantvertiefung insbesondere eine Innensechskantvertiefung (5) zum Aufnehmen eines entsprechenden Mehrkant-Stiftschlüssels insbesondere eines Sechskant-Stiftschlüssels ist.

6. Geräteblende nach Anspruch 5, **dadurch ge- kennzeichnet, dass** die Innenmehrkantvertiefung (5) zum Aufnehmen eines Torx-Stiftschlüssels ausgebildet ist.

7. Geräteblende nach einem der vorhergehenden Ansprüche, **dadurch gekennzeichnet, dass** die dem Fahrgastraum zugewandte Oberfläche der Verschlusselemente (3) gegenüber der dem Fahrgastraum zugewandten Oberfläche (6) der Geräteblende (1) vertieft ist.

8. Geräteblende nach einem der vorhergehenden Ansprüche, **dadurch gekennzeichnet, dass** die radial umlaufende Sollbruchstelle (7) in einer gegenüber der dem Fahrgastraum zugewandten Oberfläche (6) vertieften Ebene ausgebildet ist.

9. Geräteblende nach einem der vorhergehenden Ansprüche, **dadurch gekennzeichnet, dass** die Entsicherungsöffnungen (4) ganz oder teilweise sich zu der dem Fahrgastraum zugewandten Seite hin konisch erweiternd ausgebildet sind.

10. Geräteblende nach Anspruch 9, **dadurch ge- kennzeichnet, dass** die Sollbruchstelle (7) im Bereich der konischen Erweiterung (8) angeordnet ist.

11. Geräteblende nach einem der vorhergehenden Ansprüche, **dadurch gekennzeichnet, dass** sich die Entsicherungsöffnungen (4) durch an der dem Fahrgastraum abgewandten Seite hervorstehende Ansätze (11) erstrecken.

12. Geräteblende nach einem der vorhergehenden Ansprüche, **dadurch gekennzeichnet, dass** Geräteblende (1) und Verschlusselemente (3) als Spritzgussteil, insbesondere als Kunststoffspritzgussteil ausgebildet sind.

## Claims

1. Apparatus front panel, in particular car radio front panel, for an apparatus, in particular a car radio, which may be installed in a receiving aperture of a dashboard of a motor vehicle, the apparatus being able to be inserted into a holder arranged in the receiving aperture and secured by holding elements and the holding elements being able to be moved by means of a pin-like tool into their position of release and the apparatus being able to be withdrawn from the holder, with release apertures in the apparatus front panel which are oriented towards the passenger compartment of the motor vehicle, by means of which release apertures the pin-like tool may be releasingly passed through the holding elements, the release apertures being able to be closed by closure elements, **characterized in that** the closure elements (3) are formed integrally with the apparatus front panel (1) via radially peripheral predetermined rupture points (7).

2. Apparatus front panel according to Claim 1, **characterized in that**, on their face facing the passenger compartment, the closure elements (3) comprise a moulded part for positively receiving a tool, by means of which the closure elements (3) may be rotated about the longitudinal axis of the release apertures (4) .

3. Apparatus front panel according to Claim 2, **characterized in that** the moulded part is a recessed receiver for a rotary tool.

4. Apparatus front panel according to Claim 3, **characterized in that** the recessed receiver is a slot or cross-head slot for receiving a screwdriver.

5. Apparatus front panel according to Claim 3, **characterized in that** the recessed receiver is an internal polygonal recess, in particular an internal hexagonal recess (5), for receiving a corresponding polygonal key, in particular a hexagon key.

6. Apparatus front panel according to Claim 5, **characterized in that** the internal polygonal recess (5) is formed to receive a torx key.

7. Apparatus front panel according to one of the preceding claims, **characterized in that** the surface of the closure elements (3) facing the passenger compartment is recessed relative to the surface (6) of the apparatus front panel (1) facing the passenger compartment.

8. Apparatus front panel according to one of the preceding claims, **characterized in that** the radially peripheral predetermined rupture point (7) is formed in a plane which is recessed relative to the surface (6) facing the passenger compartment.

9. Apparatus front panel according to one of the preceding claims, **characterized in that** the release apertures (4) are fully or partially formed to widen in a conical manner towards the face facing the passenger compartment.

10. Apparatus front panel according to Claim 9, **characterized in that** the predetermined rupture point (7) is arranged in the region of the conical widened portion (8).

11. Apparatus front panel according to one of the preceding claims, **characterized in that** the release apertures (4) extend through projections (11) projecting on the face facing away from the passenger compartment.

12. Apparatus front panel according to one of the preceding claims, **characterized in that** the apparatus front panel (1) and closure elements (3) are formed as injection moulded parts, in particular as plastics injection moulded parts.

## Revendications

1. Panneau avant d'appareil, notamment panneau avant de poste autoradio, pour un appareil, notamment pour un poste autoradio, encastrable dans une ouverture de réception d'un tableau de bord d'un véhicule automobile, où l'appareil peut être engagé dans un support ménagé dans l'ouverture de réception et peut être fixé par des organes de retenue et où, au moyen d'un outil ressemblant à une broche, il est possible de déplacer les organes de retenue dans leur position non verrouillée et de sortir l'appareil du support, comportant, dans le panneau avant de l'appareil, des trous de dégagement dirigés vers l'habitacle du véhicule automobile, dans lesquels l'outil ressemblant à une broche peut être introduit pour libérer les organes de retenue, les trous de dégagement pouvant être obturés par des organes d'obturation, **caractérisé par le fait que** les organes d'obturation (3) sont conçus en une seule pièce avec le panneau avant d'appareil (1) en passant par des points (7) radialement périphériques destinés à la rupture.

2. Panneau avant d'appareil selon la revendication 1, **caractérisé par le fait que** les organes d'obturation (3) ont, sur leur face tournée vers l'habitacle, une partie profilée destinée à recevoir un outil en assemblage géométrique et au moyen de laquelle on peut faire tourner les organes d'obturation (3) autour de l'axe longitudinal des trous de dégagement (4).

3. Panneau avant d'appareil selon la revendication 2, **caractérisé par le fait que** la partie profilée est un logement creux destiné à accueillir un outil à tourner.

4. Panneau avant d'appareil selon la revendication 3, **caractérisé par le fait que** le logement creux est une fente ou une fente en croix permettant d'accueillir un tournevis.

5. Panneau avant d'appareil selon la revendication 3, **caractérisé par le fait que** le logement creux est un enfoncement à intérieur polygonal, notamment un enfoncement (5) à intérieur hexagonal, destiné à accueillir une clef mâle polygonale correspondante, notamment une clef mâle hexagonale.

6. Panneau avant d'appareil selon la revendication 5, **caractérisé par le fait que** l'enfoncement (5) à intérieur polygonal est conçu pour accueillir une clef mâle Torx.

7. Panneau avant d'appareil selon l'une des revendications précédentes, **caractérisé par le fait que** la surface des organes d'obturation (3) tournée vers l'habitacle est en retrait par rapport à la surface (6) du panneau avant d'appareil (1) tournée vers l'habitacle.

8. Panneau avant d'appareil selon l'une des revendications précédentes, **caractérisé par le fait que** le point (7) radialement périphérique destiné à la rupture est conçu dans un plan en retrait par rapport à la surface (6) tournée vers l'habitacle.

9. Panneau avant d'appareil selon l'une des revendications précédentes, **caractérisé par le fait que** les trous de dégagement (4) sont conçus en s'élargissant entièrement ou partiellement d'une façon conique en allant vers le côté tourné vers l'habitacle.

10. Panneau avant d'appareil selon la revendication 9, **caractérisé par le fait que** le point (7) radialement périphérique destiné à la rupture est disposé dans la zone de l'agrandissement conique (8).

11. Panneau avant d'appareil selon l'une des revendications précédentes, **caractérisé par le fait que** les trous de dégagement (4) sont prolongés par les avancées (11) faisant saillie sur le côté opposé à l'habitacle.

12. Panneau avant d'appareil selon l'une des revendications précédentes, **caractérisé par le fait que** le panneau avant d'appareil (1) et les organes d'obturation (3) sont conçus sous la forme de pièces moulées par injection, notamment sous la forme de pièces en matière plastique moulées par injection.
